# FASCICULE DE BREVET EUROPEEN

(11) **EP 1 786 738 B1**
(45) Date de publication et mention de la délivrance du brevet: **17.02.2016**
(21) Numéro de dépôt: 05800023.3
(22) Date de dépôt: 19.09.2005
(51) Int. Cl.: C01B 33/18, C01B 3/00, C03B 19/06, C03B 20/00, E04B 1/76, C03C 11/00, C03B 19/10

(54) **MICROSPHERES DE SILICE, PROCEDE DE FABRICATION, D'ASSEMBLAGE ET UTILISATIONS POSSIBLES DE MICROSPHERES DE SILICE**
SILIKATMIKROSPHÄREN, VERFAHREN ZU DEREN HERSTELLUNG UND ZUSAMMENFÜGUNG SOWIE DEREN MÖGLICHE VERWENDUNGEN
SILICA MICROSPHERES, METHOD FOR MAKING AND ASSEMBLING SAME AND POSSIBLE USES OF SILICA MICROSPHERES

(30) Priorité: 17.09.2004 FR 0409866
(43) Date de publication de la demande: 23.05.2007
(73) Titulaire: Rakotoarison, Sylvain, 91400 Saclay (FR)
(72) Inventeur: Rakotoarison, Sylvain, 91400 Saclay (FR)
(74) Mandataire: Laget, Jean-Loup
(86) Numéro de dépôt international: PCT/FR2005/050759
(87) Numéro de publication internationale: WO 2006/030166

(56) Documents cités:
- FR-A- 2 619 101
- US-A- 4 391 646
- KAROLY Z ET AL: "BEHAVIOR OF SILICA PARTICLES OF DIFFERENT MICROSTRUCTURE ON RF THERMAL PLASMA TREATMENT" JOURNAL OF MATERIALS SCIENCE LETTERS, CHAPMAN AND HALL LTD. LONDON, GB, vol. 21, no. 24, 15 décembre 2002 (2002-12-15), pages 1943-1945, XP001166772 ISSN: 0261-8028
- BUDOV V V: "HOLLOW GLASS MICROSPHERES USE, PROPERTIES, AND TECHNOLOGY (REVIEW)" GLASS AND CERAMICS, CONSULTANTS BUREAU. NEW YORK, US, vol. 51, no. 7/8, 1 juillet 1994 (1994-07-01), pages 230-235, XP000496884 ISSN: 0361-7610
- BICA I: "Obtaining of micro-spheres in plasma: theoretical model" MATERIALS SCIENCE AND ENGINEERING B, ELSEVIER SEQUOIA, LAUSANNE, CH, vol. 77, no. 3, 29 septembre 2000 (2000-09-29), pages 293-296, XP004224507 ISSN: 0921-5107

## Description

La présente invention concerne des microsphères de silice, leur procédé de fabrication, d'assemblage et différentes applications possibles de microsphères de silice.

On connaît notamment par le brevet FR 2 619 101 un procédé de fabrication de microsphères de silice dont la composition fait apparaître une forte teneur en silice. Un tel procédé implique deux étapes distinctes : le traitement thermique de particules de verre broyées par l'utilisation d'un brûleur classique suivi d'un traitement chimique de désalcalinisation des particules. Par ce procédé, sont obtenues, à la suite des deux traitements, des microsphères de silice dont la composition pondérale en silice est relativement élevée. Ce procédé présente notamment de l'intérêt dans le recyclage du calcin. Cependant, l'utilisation d'un brûleur classique présente plusieurs inconvénients. Tout d'abord, d'après ce document, l'utilisation d'un brûleur classique ne permet pas, à lui seul, d'obtenir un taux de pureté en silice élevé ce qui nécessite un deuxième traitement, de nature chimique, dont la mise en oeuvre est délicate.

De plus, l'utilisation d'un brûleur classique permet le traitement thermique de particules à une température comprise de 1500°C à 1750°C. Par conséquent, le traitement d'un matériau de base présentant un taux de pureté en silice élevé et qui comporte ainsi une température de fusion plus élevée est très difficile par ce procédé.

Enfin, l'utilisation de ce procédé rend la maîtrise de la température et du bilan d'énergie et de matière insatisfaisante, ce qui a pour conséquences possibles une déperdition d'énergie, un rendement en microsphères de silice abaissé, l'obtention d'une plus grande quantité de nanoparticules de silice (suies de silice) et une inhomogénéité de la granulométrie des particules.

La publication de Z. Kàroly (« behavior of silica particles of different microstructure on RF thermal plasma treatment ») issue du « Journal of materials science Letters de 2002, p. 1943 à 1945 », décrit un procédé de fabrication de microsphères creuses en céramique. Le procédé comprend une étape d'introduction d'un précurseur (poudre de silice) au sein d'un plasma inductif.

L'invention a donc pour but de proposer des microsphères de silice de silice de grande pureté en silice, de forme et de granulométrie régulière et un procédé de fabrication de ces microsphères de silice qui évite les inconvénients précités et qui permette notamment d'enrichir le taux de silice des microsphères et/ou de diminuer le taux d'impuretés (éléments autres que la silice) des microsphères. Un autre but de l'invention est de proposer des procédés d'assemblage, d'utilisation dans le flocage et l'isolation thermique de microsphères de silice de toutes natures.

A cet effet, l'invention a pour objet une microsphère de silice présentant un diamètre extérieur compris entre 50 et 125µm, de préférence compris entre 60 et 90 µm, une épaisseur de paroi supérieure à 1 µm, de préférence comprise entre 1 et 3 µm et une densité comprise entre 0,3 et 0,7g/cm³. Ainsi, grâce à leur faible densité et à la finesse de leurs parois, les microsphères de silice forment un matériau très léger et qui peut être, par conséquent, utilisé comme matériau pour alléger la structure dans laquelle les microsphères de silice sont intégrées (par exemple par inclusion dans du béton). Cependant, les parois des microsphères de silice sont suffisamment épaisses pour conférer aux microsphères de silice une résistance mécanique satisfaisante et notamment une importante résistance à la compression qui est supérieure au MPa/m².

Préférentiellement, la microsphère de silice comporte plus de 95% en masse de silice par rapport à la masse totale de la microsphère de silice, de préférence plus de 99% en masse de silice par rapport à la masse totale de la microsphère de silice. Par conséquent, les microsphères de silice présentant un taux de pureté supérieur à 95% (défini par la masse de silice par rapport à la masse totale de la microsphère de silice) peuvent être utilisées dans des applications à haute température (supérieures à 1600°C).

En outre, les microsphères de silice selon l'invention présentent une importante surface spécifique de 0,08 à 0,1 m²/g ce qui leur permet d'avoir une surface de contact importante avec le milieu environnant.

Enfin, les microsphères de silice présentent une structure amorphe (car la structure est vitrifiée pendant le traitement thermique) qui leur permet d'être reconnues comme non cancérogènes et non pulvérulentes, ce qui leur permet d'être manipulées sans danger par l'utilisateur.

L'invention a également pour objet un procédé pour la fabrication de microsphères de silice selon l'invention, caractérisé en ce qu'il comprend au moins une étape d'injection d'au moins un précurseur des microsphères de silice au sein d'un plasma inductif, ledit plasma inductif étant préférentiellement dopé avec un hydrocarbure tel que le propane ou le méthane. Le terme « précurseurs de microsphères de silice » doit être interprété de manière large. En effet, les précurseurs de microsphères de silice qui sont injectés au sein du plasma inductif peuvent être de différents types : de la poudre de verre de silice et/ou de quartz non prétraitées, des microsphères de silice, ou encore de la poudre de verre de silice et/ou de quartz ou des tronçons de microtubes de silice prétraités. Différents types de précurseurs peuvent être injectés au sein du plasma inductif. Avantageusement, un seul type de précurseur est injecté au sein du plasma inductif.

Le terme « au sein d'un plasma inductif » peut être interprété comme « au sein d'un réacteur à plasma inductif », « dans un environnement proche du plasma inductif » ou dans le cas échéant « au centre d'un plasma inductif ».

Ce procédé permet la formation de microsphères de silice creuses ayant un taux de pureté en silice élevé, c'est-à-dire, au sens de la description qui suit, supérieur à 95%, voire très élevé de préférence supérieur à 99%. Le taux de pureté en silice des microsphères de silice obtenues par le procédé selon l'invention, qui dépend du taux de pureté en silice du précurseur, est plus élevé que le taux de pureté en silice du précurseur (sauf lorsque le précurseur, sous forme de poudre de silice ou de quartz, de microsphère ou de tronçons de microtubes de silice, présente un taux de pureté en silice extrêmement élevé c'est-à-dire supérieur à 99,99%). Le taux de pureté est exprimé en masse de silice par rapport à la masse totale de la microsphère obtenue. L'enrichissement en silice résulte de la suppression des impuretés provenant des précurseurs et/ou des additifs, les additifs étant cependant présents en quantité faible (entre quelques ppm et quelques centaines de ppm).

Ce procédé peut ainsi, par exemple, être appliqué au recyclage des microsphères de silice. Dans ce cas, le précurseur est constitué de microsphères de silice par exemple présentant un taux de pureté initial en silice autour de 60% dont il est souhaitable d'augmenter le taux de pureté, le précurseur pouvant être constitué de microsphères de silice issues du procédé selon l'invention ou de tout autre procédé. Cette variante de procédé permet, de manière étonnante, d'obtenir des microsphères de silice à taux de pureté élevé, alors qu'il était attendu que des microsphères de silice ne résistent pas aux conditions de pression et de température au sein du plasma inductif sans ramollir, s'affaisser voire exploser. En outre, l'intérêt d'un tel traitement de recyclage des microsphères de silice permet l'élimination des impuretés résidant non seulement au sein des parois des microsphères de silice mais également entre les microsphères de silice. Le traitement de recyclage permet également d'homogénéiser et contrôler la forme et les caractéristiques physico-chimiques (épaisseur de paroi, densité, surface spécifique etc) entre les microsphères de silice ce qui rend les microsphères de silice plus fiables et plus solides lors de leur utilisation ultérieure. Enfin, le traitement de recyclage rend les parois des microsphères amorphes (c'est-à-dire non cristallines) ce qui limite les risques sanitaires liés à leur utilisation.

Ce procédé permet en outre de traiter thermiquement des matériaux ayant un taux de pureté en silice supérieur à 99,99%.

Enfin, ce procédé permet une bonne maîtrise des différents paramètres réactionnels tels que la température, les flux d'énergie et de matière. Grâce à ce procédé, il est possible d'obtenir des microsphères de silice de distribution granulométrique plus homogène qu'avec un traitement thermique classique de type à brûleur.

Avantageusement, le procédé peut comporter en outre une étape d'injection d'halogénure de silicium. Préférentiellement, l'étape d'injection d'halogénure de silicium est simultanée à l'injection du précurseur. Cette étape permet d'augmenter davantage le taux de pureté en silice entre le précurseur des microsphères de silice et les microsphères de silice. Cette étape permet de doper les microsphères en halogène, augmentant ses propriétés selon les applications. De plus, cette étape est simultanée au traitement par plasma inductif, ce qui représente un gain de temps pour le procédé.

Selon un mode de réalisation préféré du procédé, le procédé comporte en outre une étape de prétraitement du précurseur des microsphères de silice préalable à l'étape d'injection dudit précurseur au sein d'un plasma inductif. Ce prétraitement peut être du type par voie humide ou sèche.

Selon une première variante, le précurseur des microsphères de silice est une poudre de verre de silice ou de quartz de granulométrie inférieure à 5µm, de préférence inférieure à 2µm.

Le prétraitement est effectué de préférence par voie humide, c'est-à-dire en présence d'eau, pour ce premier type de précurseur. L'utilisation de poudre de verre de silice ou de quartz présentant préférentiellement un taux de silice supérieur à 95% et plus avantageusement supérieur à 98%, et présentant la granulométrie proposée permet l'obtention de microsphères de silice avec une distribution granulométrique, une épaisseur de paroi et une densité homogènes. En outre, des précurseurs constitués de microsphères de silices ou de microtubes de silice peuvent également être prétraités par voie humide.

Préférentiellement, selon cette première variante, l'étape de prétraitement du précurseur des microsphères de silice consiste à mélanger le précurseur des microsphères de silice dans de l'eau avec au moins un additif qui est un agent d'expansion et/ou un agent liant et/ou un agent fondant, la composition de précurseur issue du mélange étant ensuite injectée au sein d'un plasma inductif. L'eau est préférentiellement de l'eau déminéralisée. Cette étape de prétraitement du précurseur des microsphères de silice, par voie humide, permet d'augmenter davantage l'homogénéité de la distribution granulométrique. Cette étape confère également une plus grande homogénéité des autres paramètres structuraux des microsphères de silice tels que l'épaisseur de paroi et la densité. La proportion minimale d'eau à ajouter aux microsphères de silice dans un prétraitement par voie humide est de 40%, préférentiellement supérieure à 50% par rapport à la masse totale de la composition de précurseur.

Avantageusement, la composition de précurseur comporte moins de 60% en masse de précurseur des microsphères de silice par rapport à la masse totale de ladite composition de précurseur, de préférence moins de 50% en masse de précurseur des microsphères de silice par rapport à la masse totale de la composition de précurseur.

De manière préférentielle, la composition de précurseur comporte du précurseur des microsphères de silice et de l'eau de mer. Cette variante de préparation de la composition de précurseur présente l'avantage d'être moins onéreuse.

Selon une première forme de réalisation de ladite première variante, la composition de précurseur est directement injectée au sein d'un plasma inductif.

Selon une deuxième forme de réalisation de ladite première variante, la composition de précurseur est en outre concentrée par filtration avant d'être injectée au sein d'un plasma inductif. Cette étape permet d'augmenter la teneur en silice de la composition de précurseur avant injection au sein du plasma inductif afin d'augmenter le taux de pureté en silice des microsphères de silice. Avantageusement, l'étape de filtration comporte en outre une étape de séparation granulométrique avant injection. Cette étape permet, en réduisant la distribution granulométrique des précurseurs de microsphères de silice, d'obtenir des microsphères de silice de distribution granulométrique plus étroite.

Selon une troisième forme de réalisation de ladite première variante, des gouttelettes de ladite composition de précurseur sont enrobées de poudre de silice synthétique avant d'être injectées au sein d'un plasma inductif. Cette étape permet d'augmenter la teneur en silice de la composition de précurseur avant son injection au sein du plasma inductif afin d'augmenter le taux de pureté en silice des microsphères de silice. Préférentiellement, l'étape d'enrobage par de la poudre de silice synthétique s'effectue en pulvérisant la composition de précurseur sur une table vibrante supportant un agent anti-mouillage et ladite poudre de silice synthétique, l'agent anti-mouillage étant préférentiellement constitué de matériau d'origine végétale, en particulier de spores de lycopode. L'agent anti-mouillage peut également être constitué de tout autre matériau d'origine végétale et notamment de spores de fougères.

Selon une deuxième variante du mode de réalisation préféré de l'invention, le précurseur des microsphères de silice est sous forme de microtubes de silice. Ce type de précurseur des microsphères de silice nécessite une étape de prétraitement, par voie sèche, préalable à l'injection au sein du plasma inductif. Avantageusement, le taux de pureté en silice des microtubes de silice est supérieur à 99,9 % en masse. Le taux de pureté en silice des microtubes de silice est préférentiellement supérieur à 99,99 % en masse.

De manière préférentielle, l'étape de prétraitement du précurseur des microsphères de silice comprend une étape de découpe des microtubes de silice au laser. Cette étape de découpe des microtubes de silice au laser permet d'obtenir des tronçons de microtubes directement injectables au sein du plasma inductif. Ces tronçons présentent, après découpe par un laser, des extrémités soudées. Avantageusement, avant l'étape de découpe, les microtubes sont dépolis au niveau de leur génératrice supérieure par voie chimique, par voie thermique ou par voie mécanique. Cette étape de dépolissage permet d'économiser une partie de l'énergie consommée par le laser lors de l'amorçage de la découpe au niveau de la génératrice supérieure des microtubes. De manière préférentielle, l'étape de découpe des microtubes de silice comprend en outre une étape simultanée de balayage par un gaz de balayage. Le gaz de balayage est préférentiellement de l'hydrogène ou de l'hélium. Le gaz de balayage est ainsi emprisonné dans les tronçons dont les extrémités sont soudées par la découpe au laser.

L'invention a également pour objet des procédés d'assemblage de microsphères de silice. Les microsphères de silice utilisées dans les procédés d'assemblage suivants peuvent présenter des caractéristiques physico-chimiques différentes (épaisseur de paroi, densité, surface spécifique etc) et/ou un taux de pureté inférieur à 95%, par exemple de 60%.

Selon une première variante, l'assemblage de microsphères de silice est effectué par agglomération des microsphères par un agent agglomérant. L'agent agglomérant est constitué de toute substance permettant d'enrober et lier entre elles les microsphères de silice. L'agent agglomérant est par exemple un polymère synthétique ou naturel et préférentiellement de l'amidon. Le procédé d'assemblage selon ladite première variante permet d'obtenir des matériaux légers, réalisables dans de multiples formes, par exemple sous forme de plaques à la dimension choisie, de façon simple et économique qui peuvent notamment être utilisées comme matériau d'isolation thermique dans le domaine du bâtiment ou pour les équipements dissipant une chaleur très élevée par exemple un four.

Selon une autre variante, le procédé d'assemblage de microsphères de silice, par frittage discontinu qui comprend les étapes consistant à :
- Eventuellement mélanger des microsphères de silice et de la nanopoudre de silice de façon à obtenir une composition,
- Tasser des microsphères de silice ou ladite composition dans un moule,
- Préchauffer les microsphères de silice ou la composition par application de micro-ondes préférentiellement en présence de vapeurs d'acide oxalique et
- Chauffer les microsphères de silice ou la composition préchauffée dans un four thermique.

La nanopoudre (ou poudre dite submicronique) de silice est constituée de particules de silice de granulométrie comprise entre 250 et 1000 nm et est un sous-produit du traitement thermique de la silice.

Selon une dernière variante d'application, le procédé d'assemblage de microsphères de silice, par frittage continu qui comprend les étapes consistant à :
- Eventuellement mélanger des microsphères de silice et de la nanopoudre de silice de façon à obtenir une composition,
- Chauffer des microsphères de silice ou ladite composition en présence d'une résistance électrique en déposant lesdites microsphères de silice ou ladite composition en continu sur un tapis roulant et en immobilisant temporairement lesdites microsphères de silice ou ladite composition au niveau de la résistance électrique.

Le procédé d'assemblage par frittage continu ou discontinu permet d'obtenir des matériaux qui peuvent résister à des températures allant jusqu'à 1650°C voire 2400°C lorsque le matériau assemblé est utilisé pour des pièces d'usure car il n'incorpore pas de liant organique ne résistant pas à ces températures. Le procédé d'assemblage par frittage continu ou discontinu permet également d'obtenir des matériaux d'isolation thermique.

L'invention a également pour objet l'utilisation des microsphères de silice.

Selon une première variante, les microsphères de silice sont utilisées dans le flocage par une lance thermique de surfaces telles que le béton, le plâtre ou un alliage métallique. Le terme flocage doit s'entendre dans la présente description par tout procédé consistant à recouvrir une surface qui peut être par exemple une tôle, une paroi ou un profilé par projection par une lance thermique d'un mélange comportant au moins des microsphères de silice et un liant. Préférentiellement, le flocage comprend une première étape de mélange des microsphères de silice avec de la nanopoudre de silice et avantageusement des fibres de silice et une seconde étape de projection de la composition issue dudit mélange de la première étape par lance thermique. La surface ainsi floquée peut résister à des températures très élevées. Ce type de flocage peut être envisagé pour des applications dans les domaines de l'aérospatial, de la construction navale et de la protection contre les incendies dans le bâtiment et la construction d'équipements d'infrastructures par exemple.

Les microsphères de silice utilisées dans le flocage de surfaces peuvent présenter des caractéristiques physico-chimiques différentes (épaisseur de paroi, densité, surface spécifique etc) et/ou un taux de pureté inférieur à 95%, par exemple de 60%.

Selon une deuxième variante, les microsphères de silice sont utilisées comme matériau d'isolation thermique. Les microsphères de silice utilisées comme matériau d'isolation thermique peuvent présenter des caractéristiques physico-chimiques différentes (épaisseur de paroi, densité, surface spécifique etc) et/ou un taux de pureté inférieur à 95%, par exemple de 60%.

Selon une troisième variante, les microsphères de silice sont utilisées pour le stockage de gaz. De manière préférentielle, les microsphères de silice sont utilisées pour le stockage de gaz tels que l'hélium ou l'hydrogène. Pour cette utilisation, seules des microsphères présentant un taux de silice très élevé et donc un taux d'impuretés notamment métalliques très faible doivent être utilisées.

Avantageusement, le procédé de stockage de gaz comprend une étape de chauffage de microsphères de silice à une température supérieure ou égale à 800°C en présence d'hélium ou d'hydrogène à une pression supérieure ou égale à 10⁷ Pa. Préférentiellement, une étape de balayage par de l'hélium est prévue préalablement à l'étape de chauffage sous pression. Avantageusement, une étape de refroidissement progressif sous pression supérieure ou égale à 10⁷ Pa est prévue consécutivement à l'étape de chauffage sous pression. Le gaz stocké dans les microsphères de silice est préférentiellement libéré par une étape de chauffage à une température supérieure à 850°C à pression atmosphérique.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une représentation schématique en coupe d'un mélangeur permettant la préparation et l'homogénéisation d'une composition aqueuse comportant le précurseur des microsphères de silice, cette étape étant réalisée lors du prétraitement par voie humide préalable à l'étape d'injection du précurseur au sein du plasma inductif ;
- la figure 2 est une représentation schématique en coupe transversale de la répartition des ralentisseurs dans la chambre de ralentissement, autour de la cuve du mélangeur ;
- la figure 3 est une représentation schématique d'un pulvérisateur à moteur permettant le soutirage de la composition du mélangeur ;
- la figure 4 est une représentation schématique en coupe d'un injecteur à dépression permettant le soutirage de la composition du mélangeur;
- la figure 5 est une représentation schématique en coupe d'un dispositif de filtration de la composition issue du mélangeur ;
- la figure 6 est une représentation schématique en perspective d'un dispositif de séparation granulométrique comportant un tamis unique;
- la figure 7 est une représentation schématique en coupe latérale d'un dispositif de séparation granulométrique comportant deux tamis ;
- la figure 8 est une représentation schématique en coupe transversale d'un mélangeur à tambour horizontal permettant le mélange de l'agent anti-mouillage et de la poudre de silice synthétique ;
- la figure 9 est une représentation schématique en coupe d'un mélangeur à caisson cylindrique permettant le mélange de l'agent anti-mouillage et la poudre de silice synthétique ;
- la figure 10 est une représentation schématique de côté d'une table vibrante inclinée permettant l'enrobage de gouttelettes de la composition de précurseur par un mélange constitué de l'agent anti-mouillage et la poudre de silice synthétique ;
- la figure 11 est une représentation schématique en coupe longitudinale d'un réacteur à plasma inductif ;
- la figure 12 est une représentation schématique en coupe d'un dispositif de préparation au frittage ;
- la figure 13 est une représentation schématique en coupe d'un dispositif de frittage discontinu ;
- la figure 14 est une représentation schématique en coupe d'un dispositif de frittage en continu ;
- la figure 15 est une représentation schématique en perspective d'un dispositif de découpage par un laser des microtubes de silice et
- la figure 16 est une représentation schématique en coupe d'un réacteur permettant le remplissage de microsphères de silice par des gaz tels que l'hélium ou l'hydrogène.

Dans la description détaillée qui suit, les termes « précurseur(s) de microsphère(s) de silice », « microsphère(s) de silice » et « microtube(s) de silice » seront respectivement désignés par les termes « précurseur(s) », « microsphère(s) » et « microtube(s) ». En outre, le terme « au sein d'un plasma inductif » peut être interprété comme « au sein d'un réacteur à plasma inductif », « dans un environnement proche du plasma inductif» ou dans le cas échéant «au centre d'un plasma inductif ». Enfin, le terme « injecté », appliqué à l'alimentation du réacteur à plasma en précurseur signifie «projeté» lorsque le précurseur est sous forme soit d'une suspension épaisse de poudre de silice ou de quartz, soit de tronçons de microtubes de silice, soit de microsphères de silice et « pulvérisé » lorsque le précurseur est sous forme soit d'une suspension légère de poudre de silice, soit de poudre de silice ou de quartz.

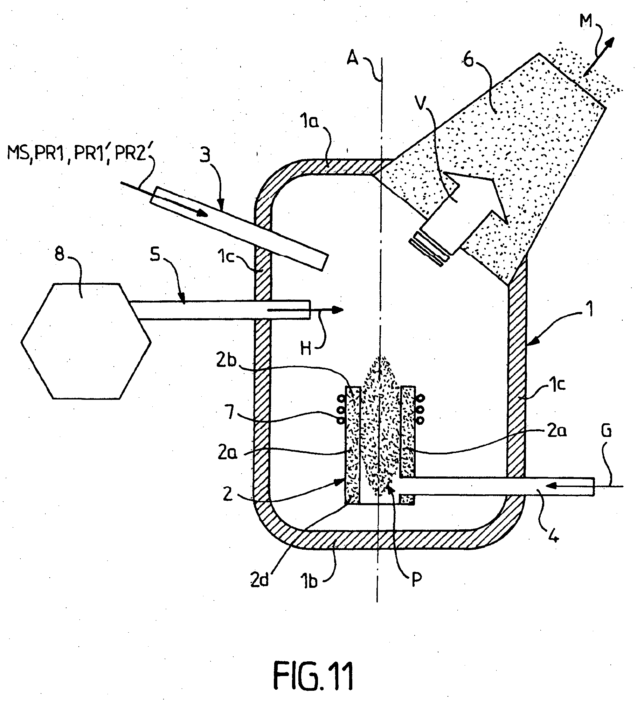

Le traitement thermique des précurseurs par plasma inductif est par exemple effectué dans un réacteur 1 à plasma P illustré sur la figure 11.

Le réacteur 1 est de forme globalement cylindrique présentant des extrémités 1a et 1b fermées. Le réacteur 1 présente en son centre, dans l'axe longitudinal A du réacteur 1, une torche 2 à plasma inductif P.

La torche 2 présente un corps 2a de forme globalement cylindrique à section circulaire présentant des extrémités 2b et 2d ouvertes. Le corps 2a de la torche 2 se compose, dans une direction radialement externe, d'une succession de tubes de silice (non représentés) dont l'axe de rotation passe par l'axe A, qui présentent un diamètre croissant et dont le tube de plus grand diamètre est entouré d'un manchon d'acier comportant un système de refroidissement par passage d'eau déminéralisée (non représenté). Le corps 2a de la torche 2 est entouré d'un inducteur 7, qui est une bobine en cuivre enduite de téflon, refroidie à l'eau déminéralisée, reliée aux bornes d'un générateur de haute fréquence industriel (non représenté) à tension élevée (de l'ordre de 10kV), de fréquence comprise entre 2 et 4 MHz et de puissance comprise entre 50 et 500 kW, préférentiellement comprise entre 90 et 200 kW.

Le corps 2a de la torche 2 présente en son centre le plasma P qui est schématisé par une ellipse et qui s'étend le long de l'axe longitudinal A. Le plasma P présente une hauteur supérieure à celle du corps 2a de la torche 2 et dépasse du corps 2a de la torche 2 au niveau de l'extrémité supérieure 2b de la torche 2. La paroi interne du corps 2a est préférentiellement recouverte d'une barbotine (non représentée) afin d'augmenter la durée de vie de la torche 2.

La paroi latérale 1c du réacteur 1 est traversée par différents conduits : le conduit d'alimentation en précurseur 3 qui peut être une canne ou une torche d'injection ou de pulvérisation, le conduit d'alimentation 4 en gaz plasmagène G, et le conduit d'alimentation 5 en halogénure de silicium H. Le conduit d'alimentation 4 en gaz plasmagène G traverse également la paroi latérale du corps 2a de la torche 2 au niveau de son extrémité inférieure 2d.

Le conduit d'alimentation en précurseur 3, avantageusement constitué de silice) achemine le précurseur MS, PR1, PR1' et PR2' préférentiellement par l'intermédiaire d'un gaz d'injection (non référencé) qui peut être de l'argon, de l'hélium et préférentiellement de l'air sec comprimé. Le gaz d'injection est de préférence de même nature que le gaz plasmagène G qui peut être de l'argon, de l'hélium et préférentiellement de l'air sec. Le gaz plasmagène G peut être avantageusement dopé par l'introduction d'hydrogène, ou d'un carburant hydrocarbure, tel que le méthane ou le propane afin de renforcer la conductivité thermique du plasma.

En outre, un dispositif d'évacuation 6 des microsphères M, schématisé sur la figure par un trapèze, traverse la paroi du réacteur 1 au niveau de la jonction entre la paroi d'extrémité 1a et la paroi latérale 1c. Le dispositif d'évacuation 6 des microsphères M peut être un cyclone de récupération évacuant les microsphères M, par aspiration, dans le sens illustré par la flèche de référence V.

Enfin, un évaporateur 8 de l'halogénure de silicium H, schématisé par un hexagone, communique avec le conduit d'alimentation 5 en halogénure de silicium H.

Lors de la mise sous tension de l'inducteur 7, un champ magnétique alternatif est généré au centre du corps 2a de la torche 2. Le gaz plasmagène G pouvant être de l'air sec, de l'argon ou de l'hélium est acheminé par le conduit d'alimentation 4 au centre du corps 2a de la torche 2 puis, en présence du champ magnétique induit par l'inducteur 7, subit une élévation de température (jusqu'à 10000K lorsque le gaz plasmagène G est de l'air sec). Le plasma P est ainsi amorcé puis entretenu.

Le précurseur peut être une poudre de silice ou de quartz de granulométrie inférieure à 5 µm ayant subi un prétraitement préalable par voie humide (précurseur PR1') ou pas (précurseur PR1). Le précurseur peut également être sous forme de tronçons (précurseur PR2') ou encore sous forme de microsphères de silice (précurseur MS). Le précurseur PR2' présente avantageusement un taux de pureté en silice de 99,99%. Les autres types de précurseurs PR1, PR1', MS présentent, selon le taux de pureté en silice souhaité pour les microsphères de silice M, un taux de pureté en silice variable : supérieur à 99,0 %.

Le précurseur MS, PR1, PR1' ou PR2' véhiculé par le gaz d'injection est injecté par le conduit d'alimentation en précurseur 3, au niveau de l'extrémité supérieure de la torche 2 au sein du plasma P.

Lorsque le précurseur est une poudre de silice ou de quartz prétraitée PR1' ou non PR1 ou des microsphères de silice MS, son injection au sein du réacteur 1 provoque deux phénomènes : l'expansion volumique due à la vaporisation de l'eau (surtout dans le cas du précurseur PR1') et au dégagement de CO et de CO₂ par les impuretés organiques (surtout dans le cas des précurseurs MS, PR1 et PR1'), suivie de la fusion en superficie des particules de précurseur (surtout dans le cas des précurseurs PR1 ou PR1'). L'expansion volumique a pour conséquence la création d'une zone interne creuse et d'une baisse de la densité des microsphères M. La fusion en superficie engendre, en raison de la tension superficielle, la formation de la structure sphéroïde des microsphères M.

Lorsque le précurseur est sous forme de tronçons PR2' de microtubes de silice PR2, son injection au sein du réacteur 1 provoque surtout le phénomène de fusion en superficie des particules de précurseur PR2' qui a également pour conséquence la formation de la structure sphéroïde des microsphères M. Avantageusement, un dispositif de mise en rotation des précurseurs PR2' est utilisé (par exemple par la création d'un mouvement rotationnel au sein du gaz d'injection dans le conduit d'alimentation en précurseur 3).

Une baisse de la température réactionnelle peut intervenir à cause de l'énergie consommée par la vaporisation de l'eau et des impuretés. Cette baisse de température peut être compensée soit en injectant, pendant la réaction, au niveau du conduit d'alimentation 4 en gaz plasmagène G, des gaz carburants tels que le méthane ou le propane, soit en ajoutant un gaz plasmagène G, de l'hydrogène ou de l'hélium, soit en augmentant la chaleur générée par le plasma P en augmentant la puissance électrique au sein de l'inducteur 7.

En outre, de l'halogénure de silicium H peut être acheminé par le conduit d'alimentation 5 au centre du réacteur 1, simultanément à l'acheminement du précurseur PR1, PR1' ou PR2'. L'halogénure de silicium H est préalablement vaporisé à 95°C par un évaporateur 8 à double chambre par exemple, pour ne pas induire une baisse de la température interne du réacteur 1. L'halogénure de silicium H, qui peut être un halogénure à base de chlore, de fluor, d'iode ou de brome et préférentiellement un tétrachlorure de silicium, a pour rôle d'augmenter la teneur en silice des microsphères M de deux façons : par l'apport de silice synthétique qui vient s'associer avec la surface des particules de précurseur PR1, PR1' et PR2', et par le retrait des impuretés métalliques (oxydes de bore et oxydes alcalins) associées aux particules de précurseur PR1, PR1' par la réaction de ces impuretés métalliques avec les atomes d'halogène de l'halogénure de silicium H, et leur volatilisation à une température différente de l'oxyde de silicium.

Lorsque les microsphères M sont formées, elles sont évacuées par aspiration par le dispositif d'évacuation 6 des microsphères M qui peut être un cyclone de récupération.

Comme énoncé précédemment, une nouvelle étape de traitement thermique au sein du réacteur 1 à plasma inductif P peut être effectuée à partir des microsphères MS (issues du procédé ou de tout autre procédé de fabrication de microsphères de silice) afin de renforcer la stabilité des parois ou de purifier davantage la silice contenue dans les microsphères MS (procédé de recyclage).

Le traitement thermique peut être également réalisé dans des réacteurs à plasma inductif de configuration différente, par exemple comportant trois à quatre torches qui peuvent être disposées par exemple verticalement vers le bas du réacteur, latéralement ou encore inclinées vers le haut ou vers le bas du réacteur. Les torches peuvent présenter un diamètre interne de 50 à 100 mm. En outre, les conduits d'alimentation en précurseur 3 peuvent être placés au centre du corps 2a de la torche 2, au niveau de l'axe A. Enfin, une pluralité de conduits d'alimentation 3 (deux à six conduits d'alimentation 3) peuvent être disposées à l'extérieur de la torche 2 en direction de la sortie du plasma P.

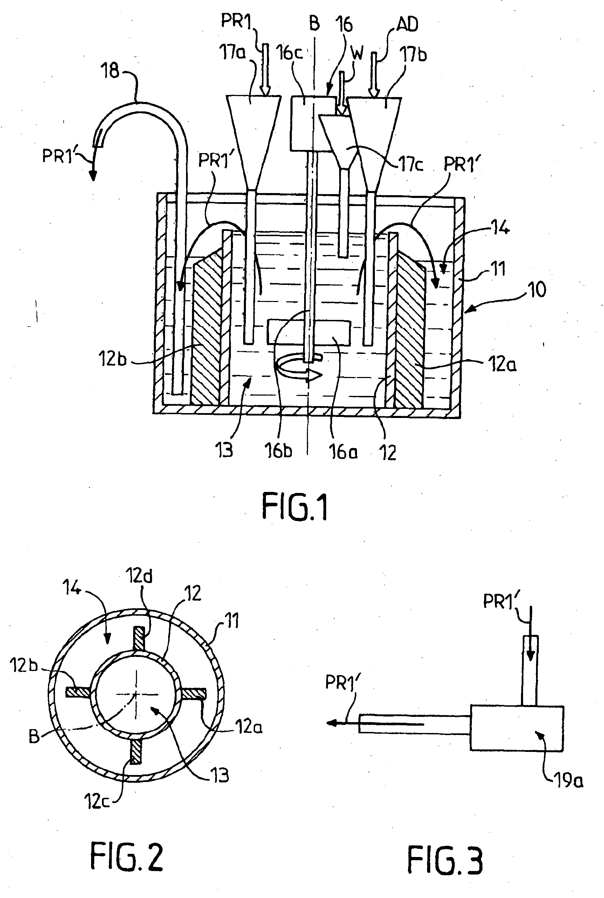

Afin d'obtenir une meilleure homogénéité des caractéristiques structurales des microsphères M tels que la granulométrie, l'épaisseur de paroi et la densité, à partir de précurseur PR1, un prétraitement est effectué préalablement à l'injection. Ce prétraitement, effectué par voie humide est illustré sur les figures 1 à 9. Ce prétraitement préalable par voie humide comprend la préparation d'un précurseur PR1 qui est sous forme d'une composition de précurseur PR1' aqueuse.

La préparation et l'homogénéisation de la composition de précurseur PR1' sont effectuées dans un mélangeur 10 tel que représenté schématiquement sur la figure 1.

Le mélangeur 10 se présente sous forme d'une cuve d'un volume préférentiellement de l'ordre de 1m³, constituée de deux parois globalement cylindriques et présentant le même axe longitudinal B : la paroi externe 11 et la paroi interne 12 dont le diamètre est inférieur à celui de la paroi externe 11. L'espace défini au sein de la paroi interne 12 est une chambre d'homogénéisation 13 et l'espace défini entre la paroi interne 12 et la paroi externe 11 est une chambre de ralentissement 14.

Le mélangeur 10 est muni d'un dispositif d'homogénéisation 16 constitué d'une pale d'homogénéisation 16a, d'un arbre de rotation 16b et d'un moteur 16c. La pale d'homogénéisation 16a et la partie inférieure d'un arbre de rotation 16b sont disposées au centre de la chambre d'homogénéisation 13, au niveau de l'axe B.

Une canne d'alimentation 17a en précurseurs PR1, une canne d'alimentation 17b en additif AD (qui peut être un agent d'expansion et/ou un agent liant et/ou un agent fondant) et une canne d'alimentation 17c en eau déminéralisée W (de préférence d'une résistivité supérieure ou égale à 1MΩ.cm) présentent une partie supérieure en forme d'entonnoir qui se prolonge dans leur partie inférieure en un conduit plongeant dans la chambre d'homogénéisation 13. La partie inférieure de la canne d'alimentation 17a en précurseurs PR1 et celle de la canne d'alimentation 17b en additif AD se prolongent jusqu'au niveau de la pale d'homogénéisation 16a. La partie inférieure de la canne d'alimentation 17c en eau déminéralisée W se prolonge uniquement dans la partie supérieure de la chambre d'homogénéisation 13. Les additifs AD sont par exemple des composés d'ammonium, de calcium et de sodium du type chlorure de sodium ou nitrate d'ammonium.

Des ralentisseurs 12a, 12b, 12c, 12d, illustrés schématiquement sur les figures 1 et 2, se présentent sous forme de parallélépipèdes parallèles à l'axe B et sont disposées dans la chambre de ralentissement 14. Chaque paire de ralentisseurs 12a, 12b et 12c, 12d est constituée de deux ralentisseurs 12a et 12b ou 12c et 12d disposés, contre la surface externe de la paroi interne 12, le long de leur tranche de plus grande longueur. Les ralentisseurs d'une même paire de ralentisseurs 12a et 12b ou 12c et 12d sont disposés dans un même plan, de part et d'autre de la chambre d'homogénéisation 13 symétriquement par rapport à l'axe B, et chaque paire 12a, 12b et 12c, 12d est disposée dans des plans perpendiculaires qui se coupent le long de l'axe B comme cela est clairement visible sur la figure 2. En variante, l'ensemble peut comporter plus de deux paires de ralentisseurs si nécessaire.

Une canne de soutirage 18 est constituée d'un conduit dont l'extrémité inférieure plonge dans le fond de la chambre de ralentissement 14 et dont l'extrémité supérieure se courbe vers l'extérieur du mélangeur 10.

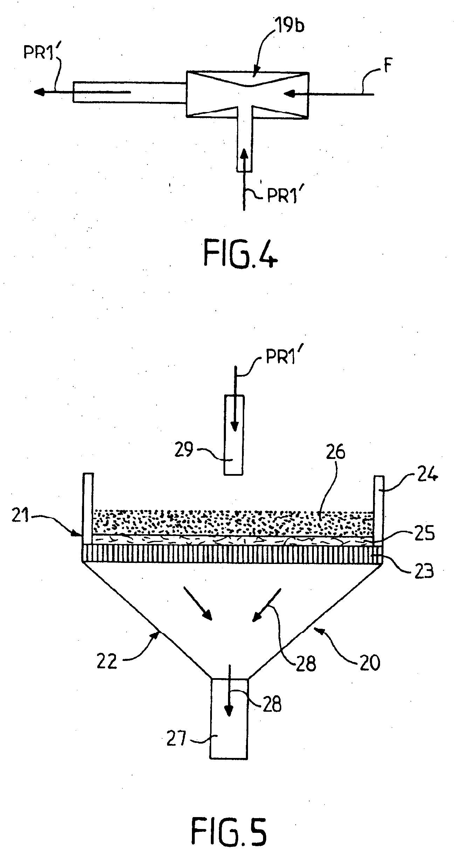

Lors de l'étape de prétraitement par voie humide, le précurseur PR1, l'additif AD (agent d'expansion et/ou agent liant et/ou agent fondant) et l'eau déminéralisée W sont respectivement acheminés en continu par les cannes d'alimentation 17a, 17b, 17c au sein de la chambre d'homogénéisation 13 et sont mélangés et homogénéisés par la pale d'homogénéisation 16a dont le mouvement de rotation généré par le moteur 16c, est transmis par l'arbre de rotation 16b. La composition de précurseur PR1' issue du mélange est transférée dans chambre de ralentissement 14 par débordement de la chambre d'homogénéisation 13. Puis la composition de précurseur PR1' est soutirée par la canne de soutirage 18 grâce au pompage effectué par un pulvérisateur à moteur 19a ou à un injecteur à dépression 19b avec l'injection d'un fluide moteur F respectivement illustrés schématiquement sur les figures 3 et 4. La composition de précurseur PR1' est soit acheminée au conduit d'alimentation en précurseur 3 pour alimenter directement le réacteur à plasma 1, soit acheminée à un dispositif de concentration par filtration ou à un dispositif de concentration par enrobage par de la silice.

Avantageusement, la composition de précurseur PR1' comporte moins de 60%, et de préférence moins de 50%, en masse de précurseur des microsphères de silice PR1' par rapport à la masse totale de ladite composition de précurseur PR1'.

De préférence, la composition de précurseur PR1' comporte une dizaine de parties par million en masse d'additifs AD par rapport à la masse totale de ladite composition de précurseur PR1'.

Selon une autre variante, le prétraitement par voie humide peut être effectué en mélangeant le précurseur PR1 avec uniquement de l'eau de mer, ce qui permet d'éviter l'utilisation d'additifs AD et d'eau déminéralisée W. Cette variante de procédé engendre une simplification du procédé et une économie relative à l'achat des additifs AD et à l'utilisation d'eau déminéralisée W. De plus, cette variante de procédé permet d'obtenir un taux de pureté en silice dans les microsphères M équivalente voire plus importante que lorsque le procédé utilise des additifs AD car des résidus d'additifs AD peuvent se retrouver dans les microsphères M. Le précurseur composé d'eau de mer doit toutefois être injecté à plus de 50mm des spires de l'inducteur ou doit préférentiellement être traité préalablement de manière à réduire sa conductivité électrique.

La figure 5 illustre le dispositif de concentration par filtration 20 qui est constitué, dans sa partie supérieure, d'un tamis de filtration 21 et dans sa partie inférieure, d'un réceptacle 22 en forme d'entonnoir qui se termine dans sa partie inférieure en un conduit d'évacuation 27.

Le tamis de filtration 21 est constitué d'une base 23 à section circulaire et perforée de trous de 10 à 15 µm de diamètre, d'une paroi cylindrique 24 et d'un filtre textile 25 disposé sur la totalité de la surface de la base 23 dans l'espace défini par la paroi cylindrique 24.

La composition de précurseur PR1' est déposée par l'intermédiaire de la trémie 29 à la surface du filtre textile 25. Par application d'une dépression au niveau du réceptacle 22 ou par la pesanteur, l'eau 28 en excès dans composition de précurseur PR1', c'est-à-dire l'eau non liée aux particules de précurseur PR1', pouvant être accompagnée de particules de granulométrie inférieure à 10 à 15µm (non représentées), traverse successivement le filtre textile 25 et la base 23 et est recueillie dans réceptacle 22 avant d'être évacuée par le conduit d'évacuation 27. L'eau 28 recueillie peut être jetée ou utilisée pour réalimenter le mélangeur 10 en reliant le conduit d'évacuation 27 à la canne d'alimentation 17c. La composition de précurseur PR1' concentrée se présente alors sous forme d'un gâteau de filtration 26 friable. Le gâteau de filtration 26 est ensuite retiré du tamis de filtration 21 à l'aide du filtre textile 25 qui le supporte. Il est ensuite préférentiellement cassé (étape non représentée) afin de désagglomérer les particules de la composition de précurseur PR1'. Puis le gâteau de filtration 26 cassé peut directement alimenter le conduit d'alimentation en précurseur 3 afin d'être injecté dans le réacteur 1 à plasma inductif P ou être soumis à une étape de séparation granulométrique.

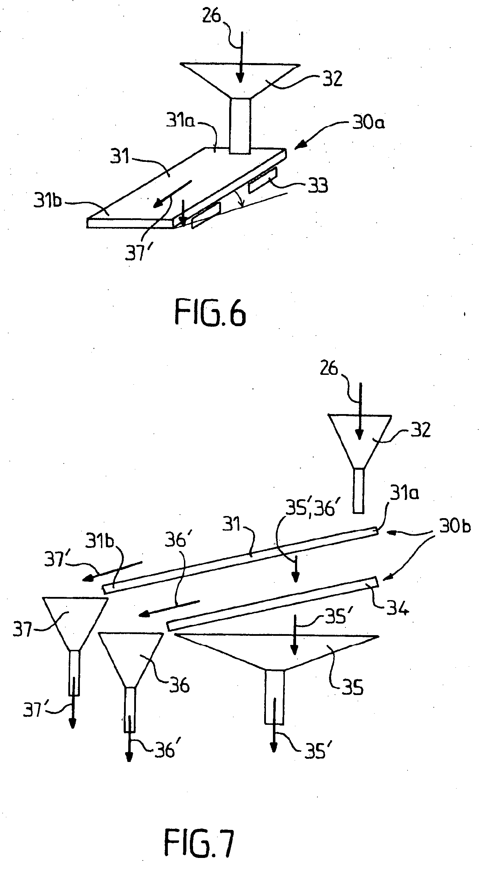

Sur la figure 6, le dispositif de séparation granulométrique 30a comporte un tamis de séparation granulométrique 31 (de la marque Rhevum par exemple) qui présente des mailles d'environ 70µm (non représentées), une trémie d'alimentation 32 et des marteaux vibrants 33. Les marteaux vibrants 33 sont situés contre les parties latérales de la face inférieure du tamis de séparation granulométrique 31.

Le tamis de séparation granulométrique 31 qui est incliné et réglable en inclinaison, présente une partie haute 31a et une partie basse 31b.

Sur la figure 7, le dispositif de séparation granulométrique 30b comporte un tamis de séparation granulométrique 34 supplémentaire disposé parallèlement et en dessous du premier tamis de séparation granulométrique 31. Le second tamis de séparation granulométrique 34 présente des mailles d'environ 50µm (non représentées). Sur cette figure, sont également représentés les réceptacles 37, 36 et 35 en forme d'entonnoir. Les marteaux vibrants 33 ne sont, quant à eux, pas représentés sur la figure 7.

Le gâteau de filtration 26 cassé est placé dans la trémie d'alimentation 32 qui le dépose au niveau de la partie haute 31a du tamis de séparation granulométrique 31. Les marteaux vibrants 33 transmettent un mouvement de va-et-vient au tamis de séparation granulométrique 31 à la fois dans la direction axiale, longitudinale et transversale. Les particules de la composition de précurseur PR1' de granulométrie supérieure à 70µm 37' roulent par gravité de la partie haute 31a vers la partie basse 31b.

Comme illustré sur la figure 7, les particules de la composition de précurseur PR1' de granulométrie inférieure à 70µm 35' et 36' traversent les mailles du tamis de séparation granulométrique 31. Les particules de la composition de précurseur PR1' de granulométrie inférieure à 70µm 35' et 36' sont alors soumises à une deuxième étape de séparation granulométrique. Seules les particules de granulométrie inférieure à 50µm 35' traversent le tamis de séparation granulométrique 34 et sont recueillies dans le réceptacle 35. Les réceptacles 37, 36 et 35 recueillent respectivement les particules de la composition de précurseur PR1' de granulométrie supérieure à 70µm 37', comprises entre 50µm et 70 µm 36', et inférieure à 50µm 35'. Puis les particules de granulométrie choisie 35', 36' ou 37' sont dirigées vers le conduit d'alimentation en précurseur 3 afin d'être injectées dans le réacteur à plasma inductif 1.

L'étape de séparation granulométrique peut intervenir également avant injection d'un précurseur MS ou PR1 n'ayant été soumis à aucun prétraitement. Cependant, un tamis de séparation présentant des mailles de taille différente est utilisé lorsque le précurseur PR1 est soumis à une étape de séparation granulométrique.

Cette étape permet, en réduisant la distribution granulométrique des précurseurs de microsphères de silice, d'obtenir des microsphères de silice de distribution granulométrique plus étroite. Il est évident tout dispositif de séparation granulométrique présentant de variantes structurelles telles qu'un nombre de tamis ou une taille de mailles différents peut être utilisé dans le cadre de la présente invention.

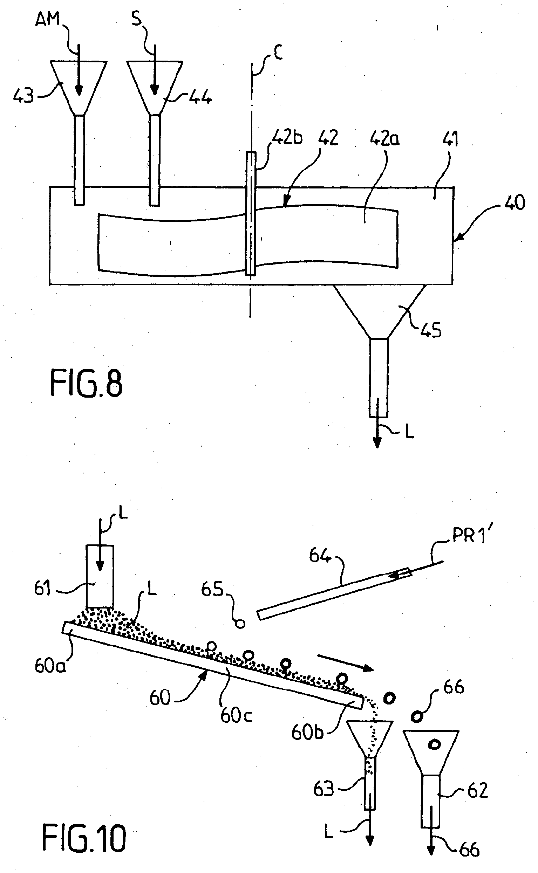

Selon une autre variante illustrée par les figures 8 à 10, la composition de précurseur PR1' est concentrée par enrobage par une composition L issue du mélange de poudre de silice synthétique S et d'un agent anti-mouillage AM avant d'être injectée au sein d'un plasma inductif P.

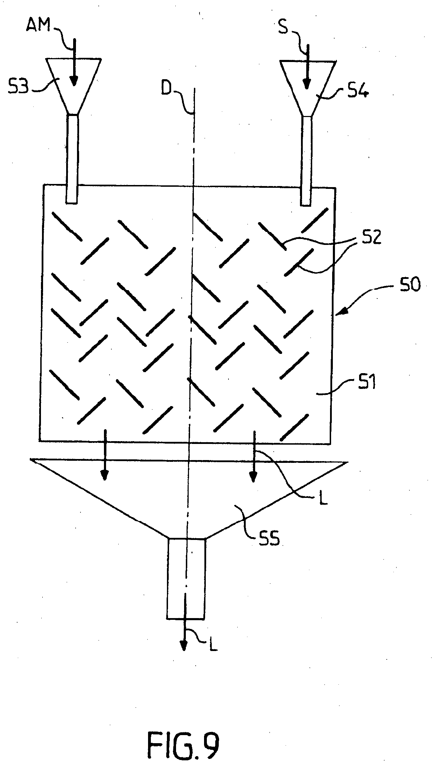

Les figures 8 et 9 illustrent des dispositifs de mélange 40 et 50 de l'agent anti-mouillage AM et de la poudre de silice synthétique S.

L'agent anti-mouillage AM peut par exemple être constitué de spores végétales et notamment de spores de lycopode.

Sur la figure 8, le dispositif de mélange de type « à hélice » 40, comporte une cuve cylindrique 41 présentant en son centre un agitateur 42 constitué d'une hélice à double pale 42a, placé dans l'axe longitudinal C du dispositif de mélange 40 et relié à un moteur (non représenté) par un arbre de rotation 42b. Le diamètre de l'hélice 42a s'étend sur environ les deux tiers du diamètre de la cuve cylindrique 41.

Deux trémies représentées par les références 43 et 44 et qui ont une forme globalement d'entonnoir, alimentent respectivement le dispositif de mélange 40 en agent anti-mouillage AM et en poudre de silice synthétique S. L'hélice 42a mélange et homogénéise de façon dynamique la composition L issue du mélange de poudre de silice synthétique S et d'un agent anti-mouillage AM. Un réceptacle 45 recueille la composition L.

Sur la figure 9, le dispositif de mélange de type « statique à chicanes » 50, comporte une cuve cylindrique 51 présentant, sur toute la surface interne de la paroi de la cuve cylindrique 51 des chicanes droites 52 disposées obliquement par rapport à l'axe longitudinal D du dispositif de mélange 50.

Deux trémies représentées par les références 53 et 54 qui ont une forme globalement d'entonnoir alimentent respectivement le dispositif de mélange 50 en agent anti-mouillage AM et en poudre de silice synthétique S. Le passage entre les chicanes droites 52 mélange et homogénéise de façon statique la composition L issue du mélange de poudre de silice synthétique S et d'un agent anti-mouillage AM. Un réceptacle 55 recueille la composition L.

L'agent anti-mouillage AM est avantageusement constitué par des spores de lycopode et est préférentiellement présent dans la composition L dans un rapport massique de 20% par rapport à la masse totale de la composition L. Ce rapport massique peut varier dans une plage pour laquelle la composition L résultant reste stable au niveau physico-chimique.

La figure 10 illustre l'étape d'enrobage qui s'effectue en pulvérisant la composition de précurseur PR1' sur une table vibrante 60 supportant la composition L.

La table vibrante 60 est inclinée définissant ainsi une partie haute 60a et une partie basse 60b. Les moyens transmettant les vibrations à la table vibrante 60 ne sont pas représentés. La table vibrante 60 est constituée d'acier inoxydable et est préférentiellement recouverte de téflon.

Une trémie représentée par la référence 61, reliée aux parties inférieures ouvertes des réceptacles 45 et 55 des figures 8 et 9 respectivement et représentée sous la forme d'un cylindre, dépose au niveau de la partie haute 60a de la table vibrante 60 la composition L issue du mélange de poudre de silice synthétique S et d'un agent anti-mouillage AM. La composition L s'étale de la partie haute 60a vers la partie basse 60b et vers les bords latéraux de la table vibrante 60 par l'action combinée de la gravité et des vibrations de la table vibrante 60.

Une canne d'injection 64 pulvérise des gouttelettes 65 de la composition de précurseurs PR1' au niveau de la partie basse médiane 60c de la table vibrante 60. Les gouttelettes 65 roulent par l'action combinée des vibrations de la table vibrante 60 et de la gravité vers la partie basse 60b de la table vibrante 60 s'entourant de la composition L pour former des gouttelettes enrobées 66.

L'agent anti-mouillage AM est un agent qui permet aux gouttelettes de composition de précurseurs PR1' lors de leur projection sur la silice synthétique S, de ne pas imprégner la silice synthétique S mais de rouler au dessus de la silice synthétique S et de s'en enrober.

Les gouttelettes enrobées 66 sont recueillies par un réceptacle 62 dont l'extrémité inférieure ouverte est reliée au conduit d'alimentation en précurseur 3.

Il est évident que des dispositifs présentant des variations structurelles telles que l'orientation, la position et le nombre de cannes d'injection 64, le degré d'inclinaison de la table vibrante 60 par exemple, peuvent être utilisés de manière équivalente dans la présente invention.

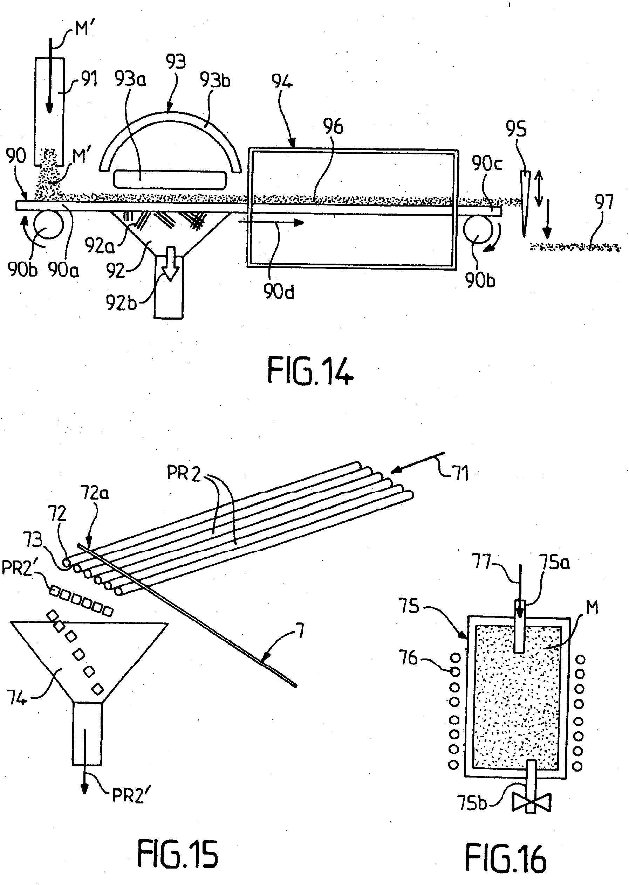

Lorsque les précurseurs PR2 sont sous forme de microtubes de silice pure, ils doivent nécessairement être soumis à un prétraitement mécanique de découpe, qui est illustré sur la figure 15, avant d'être traités thermiquement dans le réacteur 1 à plasma inductif P.

Les microtubes PR2 présentent un taux de pureté en silice supérieure à 99,9%, de préférence supérieure à 99,99% et un diamètre extérieur compris entre 25 et 1000µm. Ils sont disposés sous forme de nappe de microtubes PR2 sur une table d'avancement (non représentée). La table d'avancement est constituée d'une poutre supportant la nappe de microtubes PR2, la poutre étant elle même supportée par des rouleaux. Un dispositif de découpe au laser 7 est disposé à l'extrémité 72a de la nappe de microtubes PR2. La direction du laser 7 est perpendiculaire celle des microtubes PR2.

Les rouleaux mis en rotation transmettent à la poutre qu'ils supportent, un mouvement de translation vers le dispositif de découpe au laser 7. La poutre qui supporte la nappe de microtubes PR2 avance vers le dispositif de découpe au laser 7 et achemine, dans ce même mouvement, les microtubes PR2 vers le dispositif de découpe au laser 7. La poutre permet en outre de maintenir les microtubes PR2 alignés et droits.

Les microtubes PR2 sont alors découpés par un laser 7 en précurseurs PR2' sous forme de tronçons qui ont une longueur comprise entre 1 et 1,5 fois le diamètre des microtubes PR2. Les rouleaux sont réglés pour avancer la nappe de microtubes PR2, entre chaque étape de découpe, de la longueur des précurseurs PR2'.

La découpe par le laser 7 s'effectue par un balayage vertical du laser 7 entre la génératrice supérieure 72 des microtubes PR2 (appelé également point de contact) et la génératrice inférieure 73. L'étape de découpe par le laser 7 aboutit à la formation de précurseurs PR2' sous forme de tronçons de longueur définie en fonction du diamètre des microtubes PR2 et dont chaque extrémité est obturée par soudage autogène induit par la découpe au laser 7.

Avantageusement, avant l'étape de découpe, la nappe de microtubes PR2 est dépolie au niveau des génératrices supérieures 72 des microtubes PR2 (procédé non représenté) par voie chimique (en présence d'un pH bas), par voie thermique (fusion partielle) ou par voie mécanique (par abrasion). Cette étape de dépolissage permet d'économiser une partie de la grande quantité d'énergie consommée par le laser 7 lors de l'amorçage de la découpe au niveau de génératrice supérieure 72 des microtubes PR2.

Un balayage continu par un gaz de balayage 71 tel que l'hélium ou l'hydrogène de l'ensemble des microtubes PR2 est préférentiellement effectué de manière continue pendant l'étape de découpe au laser 7 des microtubes PR2. Ainsi l'obturation des extrémités des précurseurs PR2' induite par la découpe au laser 7 permet d'enfermer le gaz de balayage 71 au sein des précurseurs PR2'. Ainsi, cette étape de balayage continu permet également de contrôler le gaz 71 enfermé au sein des précurseurs PR2'. Le balayage peut être également réalisé avec un gaz rare et notamment l'argon.

Les précurseurs PR2' obtenus sont recueillis dans un réceptacle 74 et dont l'extrémité inférieure, ouverte, dirige les précurseurs PR2' vers un distributeur (non représenté) qui alimente le conduit d'alimentation en précurseur 3 du réacteur 1 à plasma inductif P.

Il est évident que des dispositifs de découpe au laser présentant des variations structurelles telles que l'orientation et le positionnement de la nappe de microtubes PR2 et du laser 7, le sens et le trajet de découpe par le laser 7 par exemple, peuvent être utilisés de manière équivalente dans la présente invention.

Les microsphères M issues des précurseurs PR1, PR1' et PR2' ou des microsphères de silice présentant des caractéristiques physico-chimiques différentes (épaisseur de paroi, densité, surface spécifique etc) et/ou un taux de pureté inférieur à 95% peuvent être utilisés en tant que tels notamment en tant que charge allégeante permettant, une fois mélangée à une composition (par exemple du béton), de diminuer la masse volumique finale de cette composition.

Cependant, les microsphères M ou des microsphères de silice présentant des caractéristiques physico-chimiques différentes (épaisseur de paroi, densité, surface spécifique etc) et/ou un taux de pureté inférieur à 95% peuvent également être solidarisées par un procédé d'assemblage afin d'en faciliter leur manipulation. Elles peuvent être assemblées en plaques ou en gaines tubulaires par exemple. Ces procédés d'assemblage peuvent également être renforcés par incorporation de textiles tels que des toiles, voiles, tissus épais ou nappes, fibres, microtubes ou nanopoudres de silice.

L'assemblage peut être effectué par deux procédés différents : par agglomération des microsphères M par un agent agglomérant par exemple par de l'amidon, et par frittage.

Le procédé d'assemblage par agglomération des microsphères par un agent agglomérant tel que l'amidon (non représenté) permet d'obtenir des panneaux de microsphères de silice agglomérés de forme et dimension souhaités. Ce procédé d'assemblage comprend tout d'abord l'étape de mélange des microsphères M avec une suspension aqueuse d'amidon et/ou de tout autre agent d'agglomération qui ne détériore pas les propriétés des microsphères M. Cette étape est préférentiellement précédée d'une étape de séparation granulométrique dans un dispositif tel que celui illustré sur les figures 6 ou 7 sauf que la trémie 32 distribue dans ce cas des microsphères M.

Puis la suspension aqueuse comprenant les microsphères M et l'agent agglomérant hydraté est concentré (« égoutté ») par filtration dans un dispositif similaire à celui illustré sur la figure 5 sauf que la trémie 29 distribue dans ce cas la suspension aqueuse comprenant les microsphères M et l'agent agglomérant hydraté. La suspension ainsi concentrée et transférée à l'aide d'un filtre textile similaire au filtre textile 25 de la figure 5 dans un moule de cuisson. La suspension concentrée est préférentiellement cassée par exemple dans un entonnoir à vibration qui distribue la suspension concentrée dans le moule de cuisson. Enfin, une fois dans le moule de cuisson, la suspension concentrée est préférablement tassée puis traitée thermiquement entre 300 et 400°C dans le cas où de l'amidon est utilisé comme agent agglomérant. Le traitement thermique peut être effectué dans un four thermique classique, ou avec des plaques ou presses de cuisson posées à la surface de la suspension concentrée ou encore par passage de la suspension concentrée sous des rouleaux chauffants. La cuisson permet, dans le cas où de l'amidon est utilisé comme agent agglomérant, de gélifier l'amidon (empesage), qui sous forme gélifiée fait adhérer les microsphères M entre elles. La cuisson permet ensuite de sécher la structure et ainsi de la figer, de la solidifier et de la stabiliser.

Le procédé d'assemblage par de l'amidon permet en outre une seconde application : la fabrication de textiles résistants à de fortes températures. Pour cela, des microsphères de silice sont mélangées avec une suspension aqueuse d'amidon. Cette étape est préférentiellement précédée d'une étape de séparation granulométrique dans un dispositif tel que celui illustré sur les figures 6 ou 7 sauf que la trémie 32 distribue dans ce cas des microsphères de silice. Ensuite, la suspension aqueuse est mise à chauffer afin de gélifier l'amidon et la suspension aqueuse chauffée est appliquée sur un textile par projection ou par imprégnation. En variante, le textile peut être placé dans une suspension aqueuse, qui après chauffage, imprègne le textile de manière plus homogène que dans la variante précédemment décrite.

Ce procédé d'agglomération des microsphères M par un agent agglomérant peut s'effectuer en continu.

Le procédé d'assemblage par frittage consiste à faire adhérer les microsphères M entre elles par ramollissement superficiel de leur paroi à des températures allant jusqu'à 1650°C. L'adhérence est effectuée au point de contact des microsphères M. Cette adhérence est amplifiée par le mélange des microsphères M avec de la nanopoudre de silice (telle que définie plus haut) préalable à l'étape de chauffage jusqu'à 1650°C. A cette température, la nanopoudre de silice fond et soude les microsphères M entre elles au niveau de leur point de contact.

Le procédé d'assemblage par frittage peut s'effectuer de manière continue ou discontinue.

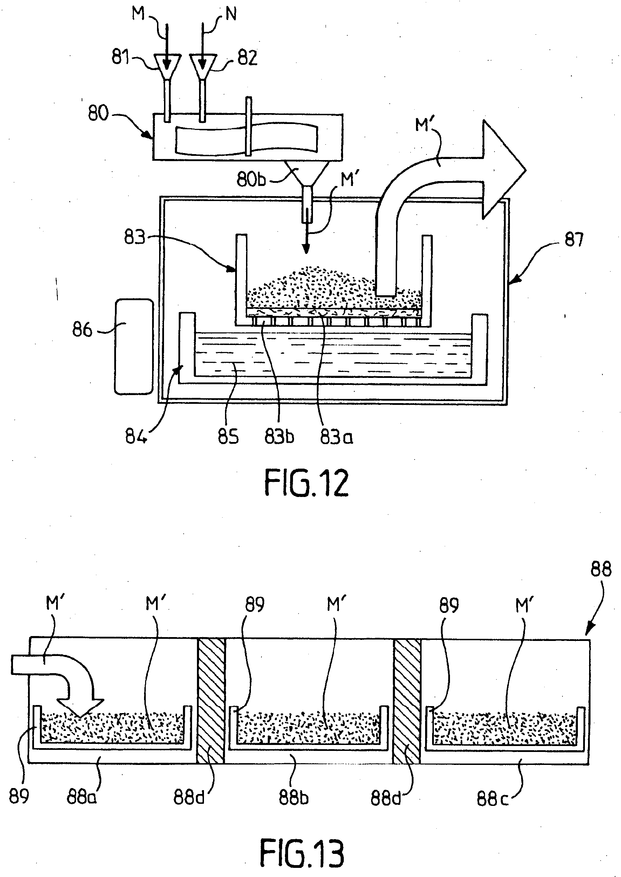

Le dispositif utilisé pour effectuer un frittage discontinu est illustré sur la figure 12 pour l'étape préalable au frittage comprenant les étapes de mélange des microsphères M avec de la nanopoudre de silice N et d'application de micro-ondes et sur la figure 13 pour l'étape de frittage.

Sur la figure 12, le dispositif de mélange 80 est du même type que le dispositif de mélange 40 illustré sur la figure 8. Il comporte des trémies 81 et 82 distribuant respectivement des microsphères M et de la nanopoudre de silice N. Un réceptacle 80b recueille la composition M' issue du mélange des microsphères M avec de la nanopoudre de silice N.

Une cellule de préparation au frittage 87 consiste en une enceinte au fond de laquelle est déposé un bac 84 préférentiellement en téflon et comportant de l'acide oxalique 85. La cellule de préparation au frittage 87 est traversée, au niveau de sa paroi supérieure de la partie inférieure du réceptacle 80b. Elle comporte enfin un panier de chargement amovible 83 disposé au dessus du bac 84 (par des moyens de maintien non représentés).

Le panier de chargement amovible 83 préférentiellement en téflon présente une base 83b criblée d'orifices avantageusement de l'ordre de 1 mm espacés tous les 5 mm et recouverte sur toute sa surface d'un tissu 83a.

La cellule de préparation au frittage 87 comporte également un générateur 86 de micro-ondes.

Pendant cette étape de préparation au frittage, le réceptacle 80b dépose la composition M' dans le panier de chargement amovible 83. Le filtre textile 83a permet d'empêcher la pénétration de la composition M' dans les orifices de la base 83b. Il permet enfin la pénétration de vapeurs d'acide oxalique 85 dans la composition M' qui favorise l'adhésion des particules de silice lors du traitement aux micro-ondes. Une fois déposée dans le panier de chargement amovible 83, la composition M' est préférablement tassée puis des micro-ondes sont appliquées dans l'enceinte 87. Après application des micro-ondes, la composition M' ainsi chauffée est sommairement durcie et assemblée. Le filtre textile 83a permet enfin le transfert de la composition M' dans un moule de cuisson 89 en téflon (ou en silice frittée et massique ou en carbure de silicium) afin que la composition M' soit soumise à un cycle de frittage dans un four thermique 88 tel qu'illustré sur la figure 13.

Le four thermique 88 est constitué de trois chambres : un four de préchauffage 88a, un four de séjour 88b et un four de refroidissement 88c qui sont séparées par des sas de zone 88d. Les sas de zone 88d sont préférentiellement constitués de parois isolantes amovibles mais peuvent également être constituées de distances entre les chambres suffisamment grandes pour que les différentes chambres puissent conserver leurs propres cycles thermiques. Le four de préchauffage 88a, le four de séjour 88b et le four de refroidissement 88c sont équipés de brûleurs (non représentés) à gaz ou électriques. Le four de préchauffage 88a peut également être équipé d'un générateur de micro-ondes (non représenté) dans le même but que celui précédemment décrit sur la figure 12. Les différents fours 88a, 88b et 88c peuvent également être munis de systèmes de régulation autonomes (non représentés). Préférentiellement, chaque four 88a, 88b ou 88c présente un volume compris entre 4 et 6 m³, et peut atteindre une température atteignant 1700°C.

La composition M' transférée dans un moule de cuisson 89 est d'abord préférablement tassée puis est successivement placée dans le four de préchauffage 88a, puis le four de séjour 88b et le four de refroidissement 88c.

La durée d'un cycle complet de frittage est comprise entre 8 et 10 heures. La durée d'un cycle de cuisson est la suivante : 120 minutes dans le four de préchauffage 88a (avec une augmentation progressive de la température de 20°C à 1000°C dans un premier temps et de 1000°C à 1200°C dans un deuxième temps) ; 120 minutes dans le four de séjour 88b (avec température de séjour constante dans une gamme allant de 1200°C à 1650°C) et 300 minutes dans le four de refroidissement 88c (avec une diminution progressive de la température de séjour à 20°C). La diminution progressive de la température permet d'éviter une rétraction thermique brutale de la composition M' frittée qui pourrait endommager la structure de la composition M' frittée.

Afin d'augmenter la productivité du procédé, il est préférable de doter le four thermique 88 d'un second four de refroidissement 88c car le cycle de refroidissement est relativement long en comparaison avec le cycle de préchauffage et de séjour.

Il est évident que tout autre dispositif de traitement thermique par exemple des plaques ou presses de cuisson posées à la surface de la composition M', des rouleaux chauffants, ou des systèmes de retournement de la composition M'frittée afin de chauffer les deux faces de la composition M' frittée, peuvent être utilisés de manière équivalente dans le cadre de la présente invention.

Le dispositif utilisé pour effectuer un frittage continu est illustré sur la figure 14.

Sur la figure 14, une trémie 91 est disposée au dessus d'une première extrémité 90a d'un tapis roulant 90. L'avancement du tapis roulant 90 dont le sens est illustré par la flèche de référence 90d, est induit par la rotation des rouleaux 90b. Le tapis roulant comporte une seconde extrémité 90c. Entre les extrémités 90a et 90c, sont successivement disposées un dispositif de chauffage 93 disposé au dessus du tapis roulant 90, composé d'une résistance électrique 93a et d'un réflecteur 93b et un tunnel de refroidissement 94 au travers duquel passe le tapis roulant 90. Un dispositif créant une dépression locale 92 est prévu au niveau du dispositif de chauffage 93 et juxtaposé à la face inférieure du tapis roulant 90. Le tapis roulant 90 est préférentiellement constitué d'une nappe de silice.

Le frittage continu est préférentiellement précédé d'une étape de mélange des microsphères M avec de la nanopoudre de silice N préalable à l'étape de chauffage comme décrite pour la figure 12. La composition M' résultant de ce mélange est acheminée en continu vers l'extrémité 90a du tapis roulant 90. L'avancement du tapis roulant 90 achemine la composition M' en dessous de la résistance électrique 93a et du réflecteur 93b. La résistance électrique 93a permet de chauffer la composition M' afin de faire adhérer les microsphères M entre elles par fusion partielle de la surface de leur paroi et de la nanopoudre de silice. Le réflecteur 93b permet de concentrer les rayonnements thermiques issus de la résistance électrique 93a sur la composition M'. Le dispositif 92 créant une dépression locale 92b rapproche temporairement les billes entre elles ce qui permet d'améliorer les échanges thermiques et ainsi favoriser la fusion partielle de leurs parois entre elles ou avec la nanopoudre de silice. Le dispositif 92 créant une dépression locale 92b comporte dans sa partie supérieure, de la silice concassée 92a qui supporte localement le tapis roulant 90 et qui permet d'éviter la déformation du tapis roulant 90 engendrée par la dépression locale 92b appliquée. La composition M' ainsi frittée après le passage au niveau de la résistance électrique 93a, forme une plaque continue 96 qui passe dans le tunnel de refroidissement dont l'action est de refroidir progressivement la plaque continue 96 afin d'éviter une contraction thermique brutale qui pourrait endommager la structure de la composition M' frittée. A la sortie du tunnel de refroidissement la plaque continue 96 est découpée par un dispositif de découpe 95 classique (de type guillotine ou scie) qui débite des tronçons de plaque 97 de composition M' frittée. Par la suite, les plaques 97 peuvent être retournés par des dispositifs de retournement de plaque ou superposées à d'autres plaques 97 afin de subir un autre traitement thermique par passage sous la résistance 93.

L'avantage du procédé d'assemblage par frittage est le fait que les pièces ainsi assemblées peuvent résister à des températures d'utilisation allant jusqu'à 1650°C voire 2400°C pour les pièces d'usure.

La compacité des microsphères assemblées peut varier en fonction des différents paramètres du procédé décrit ci-dessus (par exemple la température), et a une influence sur les propriétés physico-chimiques des microsphères assemblées, notamment en terme d'isolation thermique, de densité et de propriétés mécaniques (par exemple, une compacité plus grande diminue l'isolation thermique).

Les microsphères M issues des précurseurs PR2' ou avec un taux de pureté en silice très élevé, c'est-à-dire supérieur à 99%, peuvent en outre être utilisées dans une application particulière de réservoir à hydrogène ou hélium 77. Le dispositif permettant de transformer les microsphères M en réservoir à hydrogène ou hélium 77 est illustré sur la figure 16.

Tout d'abord, les microsphères M sont déposées dans un four à induction 75 qui est constitué d'une enceinte étanche de forme cylindrique dont les faces supérieures et inférieures forment deux ouvertures à bride étanche (non représentées), après ouverture de la bride supérieure du four. La bride supérieure du four à induction 75 est ensuite refermée.

Puis le four à induction 75 est purgé avec de l'hélium (étape non représentée) par un balayage continu d'hélium entre la vanne d'entrée de gaz 75a et la vanne d'évacuation de gaz 75b du réacteur à induction 75. Cette étape permet de remplacer l'environnement gazeux des microsphères M constitué par de l'air par un environnement chimiquement neutre constitué par de l'hélium. Ensuite la vanne d'évacuation de gaz 75b est fermée et un gaz tel que l'hélium ou l'hydrogène 77 est injecté dans le four à induction 75 sous une pression de 10⁷ à 2×10⁷ Pa pendant quelques dizaines de minutes pour un volume de l'ordre de 100 litres de microsphères M. Puis le four à induction 75 est chauffé par induction, grâce à l'inducteur 76, de façon à fournir à une température supérieure ou égale à 800°C. Enfin, le four à induction 75 est refroidi dans les mêmes conditions de pression que celles de l'étape de chauffage. Enfin, les microsphères sont évacuées hors du four à induction 75 par l'ouverture de la bride inférieure. Lorsque le gaz stocké est de l'hydrogène, les différentes étapes du procédé de stockage sont réalisées sous atmosphère contrôlée. En variante, d'autres moyens de chauffage que le chauffage par induction peuvent être utilisés.

Lors du chauffage à plus de 800°C, la silice contenue dans la paroi des microsphères M devient poreuse aux gaz de faible encombrement spatial tels que l'hélium et l'hydrogène. Pendant l'étape de chauffage par four à induction 75, de l'hélium ou de l'hydrogène 77 pénètre ainsi dans les microsphères M. Puis le refroidissement induit une diminution de la porosité de la silice vis-à-vis de l'hélium ou de l'hydrogène 77 qui se trouve « enfermé » dans les microsphères M. Les microsphères M ainsi traitées contiennent ainsi, à température ambiante, de l'hélium ou de l'hydrogène 77 sous haute pression (supérieure à 10⁷ Pa) et peuvent être utilisées comme réservoirs à hélium ou à hydrogène 77 pouvant libérer l'hélium ou l'hydrogène 77 par simple chauffage à 850°C à pression atmosphérique.

L'intérêt de cette application particulière des microsphères M réside dans le fait que, grâce au taux de pureté en silice très élevé, l'imperméabilité à la silice est plus grande et la porosité des microsphères M est maîtrisable et du gaz tel que l'hélium ou l'hydrogène peut être stocké de manière fiable au sein des microsphères M. Ainsi, l'utilisation de ce type de microsphères M n'est pas dangereuse car les microsphères M contiennent une très faible quantité de gaz stocké par microsphère, et elles ne deviennent perméables aux gaz qu'à partir de températures supérieures à 800°C. De plus, cette nouvelle forme de stockage de gaz par microsphères M est pratique car elle permet à l'utilisateur de manipuler en toute sécurité de petits volumes de gaz ou des volumes de gaz déterminables avec précision.

Enfin, les microsphères de silice peuvent être utilisées pour le flocage d'apprêt de béton, de plâtre ou d'alliage mécanique notamment lorsque la surface floquée est soumise, lors de son utilisation, à des températures supérieures à 1600°C. Le procédé de flocage est réalisé de manière classique (procédé non représenté) à l'exception du fait que la projection de la composition de flocage est effectuée par une lance thermique, par exemple une lance thermique à plasma inductif ou à arc électrique. Le procédé de flocage comprend une première étape de mélange des microsphères de silice avec de la nanopoudre de silice et des fibres de silice dans un mélangeur classique par exemple du type de celui illustré sur la figure 8 et une seconde étape de projection de la composition issue du mélange de la première étape par une lance thermique. De tels matériaux floqués présentent une bonne résistance au feu et peuvent être utilisés dans le domaine du bâtiment, de l'aérospatial ou de la construction navale.

Les structures incluant des microsphères de silice peuvent constituer de matériaux d'isolation thermique efficaces même en présence de très hautes températures d'utilisation lorsque le matériau d'isolation est constitué de microsphères de silice assemblées par frittage.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Microsphère de silice (M) présentant un diamètre extérieur compris entre 50 et 125µm, de préférence compris entre 60 et 90 µm, une épaisseur de paroi supérieure à 1 µm, de préférence comprise entre 1 et 3 µm et une densité comprise entre 0,3 et 0,7g/cm³ et comportant plus de 95% en masse de silice par rapport à la masse totale de la microsphère de silice (M), de préférence plus de 99% en masse de silice par rapport à la masse totale de la microsphère de silice (M).

2. Procédé pour la fabrication de microsphères de silice (M) selon la revendication 1, **caractérisé en ce qu'**il comprend au moins une étape d'injection d'au moins un précurseur des microsphères de silice sous forme de microsphères de silice (MS) au sein d'un plasma inductif (P), ledit plasma inductif (P) étant préférentiellement dopé avec un hydrocarbure tel que le propane ou le méthane.

3. Procédé selon la revendication 2, comportant en outre une étape de prétraitement du précurseur des microsphères de silice (PR1, PR2) préalable à l'étape d'injection dudit précurseur (PR1', PR2') au sein d'un plasma inductif (P).

4. Procédé selon la revendication 3, **caractérisé en ce que** le précurseur des microsphères de silice (PR1) est une poudre de verre de silice ou de quartz de granulométrie inférieure à 5µm, de préférence inférieure à 2µm.

5. Procédé selon l'une des revendications 3 ou 4, **caractérisé en ce que** l'étape de prétraitement du précurseur des microsphères de silice (MS, PR1) consiste à mélanger le précurseur des microsphères de silice (MS, PR1) dans de l'eau (W) avec au moins un additif (AD) qui est un agent d'expansion et/ou un agent liant et/ou un agent fondant, la composition de précurseur (PR1') issue du mélange étant ensuite injectée au sein d'un plasma inductif (P).

6. Procédé selon la revendication 5, **caractérisé en ce que** la composition de précurseur (PR1') comporte moins de 60% en masse de précurseur des microsphères de silice (PR1) par rapport à la masse totale de ladite composition de précurseur (PR1'), de préférence moins de 50% en masse de précurseur des microsphères de silice (PR1) par rapport à la masse totale de la composition de précurseur (PR1').

7. Procédé selon la revendication 5 ou 6, **caractérisé en ce que** ladite composition de précurseur (PR1') comporte du précurseur des microsphères de silice (PR1) et de l'eau de mer.

8. Procédé selon l'une des revendications 5 à 7, **caractérisé en ce que** la composition de précurseur (PR1') est en outre concentrée par filtration avant d'être injectée au sein d'un plasma inductif (P).

9. Procédé selon la revendication 8, **caractérisé en ce que** l'étape de filtration comporte en outre une étape de séparation granulométrique avant injection.

10. Procédé selon la revendication 5, **caractérisé en ce que** des gouttelettes de ladite composition de précurseur (PR1') sont enrobées de poudre de silice synthétique (S) avant d'être injectées au sein d'un plasma inductif (P).

11. Procédé selon la revendication 10, **caractérisé en ce que** l'étape d'enrobage par de la poudre de silice synthétique (S) s'effectue en pulvérisant la composition de précurseur (PR1') sur une table vibrante (60) supportant un agent anti-mouillage (AM) et ladite poudre de silice synthétique (S), l'agent anti-mouillage (AM) étant préférentiellement constitué de matériau d'origine végétale, en particulier de spores de lycopode.

12. Procédé selon la revendication 3, **caractérisé en ce que** le précurseur des microsphères de silice (PR1') est sous forme de microtubes de silice (PR2).

13. Procédé selon la revendication 12, **caractérisé en ce que** le taux de pureté en silice des microtubes de silice (PR2) est supérieur à 99,9 % en masse.

14. Procédé selon l'une des revendications 12 ou 13, **caractérisé en ce que** l'étape de prétraitement du précurseur des microsphères de silice (PR2) comprend une étape de découpe des microtubes de silice (PR2) au laser (7).

15. Procédé selon la revendication 14, **caractérisé en ce que** l'étape de découpe des microtubes de silice (PR2) comprend en outre une étape simultanée de balayage par un gaz de balayage (71).

16. Procédé selon l'une des revendications 2 à 15, **caractérisé en ce qu'**il comporte en outre une étape d'injection d'halogénure de silicium (H).

17. Procédé d'assemblage de microsphères de silice (M) selon la revendication 1, par agglomération des microsphères (M) par un agent agglomérant.

18. Procédé d'assemblage de microsphères de silice selon la revendication 1, par frittage discontinu qui comprend les étapes consistant à :
• Eventuellement mélanger des microsphères de silice (M) et de la nanopoudre de silice (N) de façon à obtenir une composition (M'),
• Tasser des microsphères de silice (M) ou ladite composition (M') dans un moule (89),
• Préchauffer les microsphères de silice (M) ou la composition (M') par application de micro-ondes préférentiellement en présence de vapeurs d'acide oxalique (85) et
• Chauffer les microsphères de silice (M) ou la composition (M') préchauffée dans un four thermique (88).

19. Procédé d'assemblage de microsphères de silice selon la revendication 1 (M) selon la revendication 1, par frittage continu qui comprend les étapes consistant à :
• Eventuellement mélanger des microsphères de silice (M) et de la nanopoudre de silice (N) de façon à obtenir une composition (M'),
• Chauffer des microsphères de silice (M) ou ladite composition (M') en présence d'une résistance électrique (93) en déposant lesdites microsphères de silice (M) ou ladite composition (M') en continu sur un tapis roulant (90) et en immobilisant temporairement lesdites microsphères de silice (M) ou ladite composition (M') au niveau de la résistance électrique (93).

20. Utilisation de microsphères de silice (M) selon la revendication 1, dans le flocage par une lance thermique de surfaces telles que le béton, le plâtre ou un alliage métallique.

21. Utilisation de microsphères de silice (M) selon la revendication 20, **caractérisé en ce que** ledit flocage comprend une première étape de mélange des microsphères de silice (M) avec de la nanopoudre de silice (N) et avantageusement des fibres de silice et une seconde étape de projection de la composition issue du mélange de la première étape par lance thermique.

22. Utilisation de microsphères de silice (M) selon la revendication 1, comme matériau d'isolation thermique.

23. Utilisation de microsphères de silice (M) issues du procédé selon l'une des revendications 12 à 15, pour le stockage de gaz (77).

24. Procédé de stockage de gaz selon la revendication 23, **caractérisé en ce qu'**il comprend une étape de chauffage de microsphères de silice (M) à une température supérieure ou égale à 800°C en présence d'hélium ou d'hydrogène (77) à une pression supérieure ou égale à 10⁷ Pa.

## Patentansprüche

1. Silikatmikrosphäre (M) mit einem Außendurchmesser zwischen 50 und 125 µm inklusive, vorzugsweise zwischen 60 und 90 µm inklusive, einer Wanddicke über 1 µm, vorzugsweise zwischen 1 und 3 µm inklusive, und einer Dichte zwischen 0,3 und 0,7 g/cm³ inklusive und aufweisend über 95 Ma% Silikat im Verhältnis zur Gesamtmasse der Silikatmikrosphäre (M), vorzugsweise über 99 Ma% Silikat im Verhältnis zur Gesamtmasse der Silikatmikrosphäre (M).

2. Verfahren zur Herstellung von Silikatmikrosphären (M) nach Anspruch 1, **dadurch gekennzeichnet, dass** es mindestens einen Injektionsschritt mindestens eines Voräufers der Silikatmikrosphären in Form von Silikatmikrosphären (MS) in ein induktives Plasma (P) umfasst, wobei das induktive Plasma (P) vorzugsweise mit einem Kohlenwasserstoff wie Propan oder Methan dotiert ist.

3. Verfahren nach Anspruch 2, **dadurch gekennzeichnet, dass** ferner einen Vorbearbeitungsschritt des Vorläufers der Silikatmikrosphären (PR1, PR2) vor dem Injektionsschritt des Vorläufers (PR1', PR2') in ein induktives Plasma (P) aufweist.

4. Verfahren nach Anspruch 3, **dadurch gekennzeichnet, dass** der Silikatmikrosphärenvorläufer (PR1) ein Pulver aus Silikat- oder Quarzglas mit einer Korngröße unter 5 µm, vorzugsweise unter 2 µm, ist.

5. Verfahren nach einem der Ansprüche 3 oder 4, **dadurch gekennzeichnet, dass** der Vorbearbeitungsschritt des Vorläufers der Silikatmikrosphären (MS, PR1) darin besteht, den Vorläufer der Silikatmikrosphären (MS, PR1) in Wasser (W) mit mindestens einem Zuschlagstoff (AD) zu mischen, der ein Expansionsmittel und/oder ein Bindemittel und/oder ein Schmelzmittel ist, wobei die Vorläuferzusammensetzung (PR1') im Ergebnis der Mischung danach in das induktive Plasma (P) injiziert wird.

6. Verfahren nach Anspruch 5, **dadurch gekennzeichnet, dass** die Vorläuferzusammensetzung (PR1') unter 60 Ma% Vorläufer der Silikatmikrosphären (PR1) im Verhältnis zur Gesamtmasse der Vorläuferzusammensetzung (PR1'), vorzugsweise unter 50 Ma% Vorläufer der Silikatmikrosphären (PR1) im Verhältnis zur Gesamtmasse der Vorläuferzusammensetzung (PR1'), aufweist.

7. Verfahren nach Anspruch 5 oder 6, **dadurch gekennzeichnet, dass** die Vorläuferzusammensetzung (PR1') Vorläufer der Silikatmikrosphären (PR1) und Meerwasser aufweist.

8. Verfahren nach einem der Ansprüche 5 bis 7, **dadurch gekennzeichnet, dass** die Vorläuferzusammensetzung (PR1') ferner durch Filtration konzentriert wird, bevor sie in das induktive Plasma (P) injiziert wird.

9. Verfahren nach Anspruch 8, **dadurch gekennzeichnet, dass** der Filtrationsschritt ferner einen granulometrischen Separationsschritt vor der Injektion aufweist.

10. Verfahren nach Anspruch 5, **dadurch gekennzeichnet, dass** Tröpfchen der Vorläuferzusammensetzung (PR1') mit synthetischem Silikatpulver (S) umhüllt werden, bevor sie in ein induktives Plasma (P) injiziert werden.

11. Verfahren nach Anspruch 10, **dadurch gekennzeichnet, dass** der Umhüllungsschritt mit dem synthetischen Silikatpulver (S) durch Sprühen der Vorläuferzusammensetzung (PR1') auf einen Vibrationstisch (60) erfolgt, der ein Anti-Benetzungsmittel (AM) und das synthetische Silikatpulver (S) trägt, wobei das Anti-Benetzungsmittel (AM) vorzugsweise aus pflanzlichem Material, insbesondere aus Lycopodiumsporen, besteht.

12. Verfahren nach Anspruch 3, **dadurch gekennzeichnet, dass** der Vorläufer der Silikatmikrosphären (PR1') in Form von Silikatmikroröhrchen (PR2) ist.

13. Verfahren nach Anspruch 12, **dadurch gekennzeichnet, dass** der Silikat-Reinheitsgrad der Silikatmikroröhrchen (PR2) über 99,9 Ma% beträgt.

14. Verfahren nach einem der Ansprüche 12 oder 13, **dadurch gekennzeichnet, dass** der Vorbearbeitungsschritt des Vorläufers der Silikatmikrosphären (PR2) einen Schneideschritt der Silikatmikroröhrchen (PR2) mit Laser (7) umfasst.

15. Verfahren nach Anspruch 14, **dadurch gekennzeichnet, dass** der Schneideschritt der Silikatmikroröhrchen (PR2) ferner einen gleichzeitigen Spülschritt durch ein Spülgas (71) umfasst.

16. Verfahren nach einem der Ansprüche 2 bis 15, **dadurch gekennzeichnet, dass** es ferner einen Injektionsschritt von Siliziumhalogenid (H) aufweist.

17. Verbindungsverfahren von Silikatmikrosphären (M) nach Anspruch 1 durch Agglomeration der Mikrosphären (M) durch ein Agglomerationsmittel.

18. Verbindungsverfahren von Silikatmikrosphären nach Anspruch 1 durch diskontinuierliches Sintern, das die folgenden Schritte umfasst:
• eventuelles Mischen der Silikatmikrosphären (M) und des Silikatnanopulvers (N), um eine Zusammensetzung (M') zu erhalten,
• Pressen der Silikatmikrosphären (M) oder der Zusammensetzung (M') in eine Form (89),
• Vorheizen der Silikatmikrosphären (M) oder der Zusammensetzung (M') durch Anwendung von Mikrowellen vorzugsweise in Anwesenheit von Oxalsäuredämpfen (85) und
• Erhitzen der Silikatmikrosphären (M) oder der vorgewärmten Zusammensetzung (M') in einem Wärmeofen (88).

19. Verbindungsverfahren von Silikatmikrosphären nach Anspruch 1 (M) nach Anspruch 1 durch kontinuierliches Sintern, das die folgenden Schritte umfasst:
• eventuelles Mischen der Silikatmikrosphären (M) und des Silikatnanopulvers (N), um eine Zusammensetzung (M') zu erhalten,
• Erhitzen der Silikatmikrosphären (M) oder der Zusammensetzung (M') in Anwesenheit eines elektrischen Widerstands (93) durch kontinuierliches Aufbringen der Silikatmikrosphären (M) oder der Zusammensetzung (M') auf ein Förderband (90) und zeitweiliges Ruhigstellen der Silikatmikrosphären (M) oder der Zusammensetzung (M') im Bereich des elektrischen Widerstands (93).

20. Verwendung von Silikatmikrosphären (M) nach Anspruch 1 beim Flocken durch eine thermische Lanze von Oberflächen wie Beton, Gips oder eine Metalllegierung.

21. Verwendung von Silikatmikrosphären (M) nach Anspruch 20, **dadurch gekennzeichnet, dass** das Flocken einen ersten Mischschritt der Silikatmikrosphären (M) mit dem Silikatnanopulver (N) und vorzugsweise den Silikatfasern und einen zweiten Projektionsschritt der Zusammensetzung im Ergebnis des Mischens des ersten Schritts durch thermische Lanze umfasst.

22. Verwendung von Silikatmikrosphären (M) nach Anspruch 1 als thermisches Isolationsmaterial.

23. Verwendung von Silikatmikrosphären (M) im Ergebnis des Verfahrens nach einem der Ansprüche 12 bis 15 für das Lagern von Gas (77).

24. Gaslagerverfahren nach Anspruch 23, **dadurch gekennzeichnet, dass** es einen Heizschritt von Silikatmikrosphären (M) auf eine Temperatur über oder gleich 800 °C in Anwesenheit von Helium oder von Wasserstoff (77) bei einem Druck über oder gleich 10⁷ Pa umfasst.

## Claims

1. A silica microsphere (M) having an outer diameter comprised between 50 and 125 µm, preferably comprised between 60 and 90 µm, a wall thickness of more than 1 µm, preferably comprised between 1 and 3 µm and a specific gravity comprised between 0.3 and 0.7 g/m³ and including more than 95% by mass of silica based on the total mass of the silica microsphere (M), preferably more than 99% by mass of silica based on the total mass of the silica microsphere (M).

2. A method for the manufacturing of silica microspheres (M) according to claim 1, **characterized in that** it comprises at least one step for injecting at least one precursor of silica microspheres as silica microspheres (MS) within an interactive plasma (P), said inductive plasma (P) being preferentially doped with a hydrocarbon such as propane or methane.

3. The method according to claim 2, further including a step for pre-treating the precursor of silica microspheres (PR1, PR2) prior to the step for injecting said precursor (PR1', PR2') within an interactive plasma (P).

4. The method according to claim 3, **characterized in that** the precursor of the silica microspheres (PR1) is a glass powder of silica or quartz with a grain size of less than 5 µm, preferably less than 2 µm.

5. The method according to one of claims 3 or 4, characterizing that the step for pre-treating the precursor of silica microspheres (MS, PR1) consists of mixing the precursor of silica microspheres (MS, PR1) in water (W) with at least one additive (AD) which is an expansion agent and/or a binding agent and/or a melting agent, the precursor (PR1') composition from the mixture is then injected within an inductive plasma (P).

6. The method according to claim 5, **characterized in that** the precursor composition (PR1') includes at least 60% by mass of precursor of the silica microspheres (PR1) based on the total mass of said precursor composition (PR1'), preferably less than 50% by mass of precursor of the silica microspheres (PR1) based on the total mass of the precursor composition (PR1').

7. The method according to claim 5 or 6, **characterized in that** said precursor composition (PR1') includes some precursor of silica microspheres (PR1) and sea water.

8. The method according to one of claims 5 to 7, **characterized in that** the precursor composition (PR1') is further concentrated by filtration before being injected within an inductive plasma (P).

9. The method according to claim 8, characterizing that the filtration step further includes a grain size separation step before injection.

10. The method according to claim 5, **characterized in that** droplets of said precursor composition (PR1') are coated with a synthetic silica powder (S) before being injected within an inductive plasma (P).

11. The method according to claim 10, **characterized in that** the coating step with the synthetic silica powder (S) is carried out by spraying the precursor composition (PR1') on a vibrating table (60) supporting an anti-wetting agent (AM) and said synthetic silica powder (S), the anti-wetting agent (AM) preferentially consisting of a material of plant origin, in particular lycopode spores.

12. The method according to claim 3, **characterized in that** the precursor of silica microspheres (PR1') is in the form of silica microtubes (PR2).

13. The method according to claim 12, **characterized in that** the silica purity level of the silica microtubes (PR2) is greater than 99.9% by mass.

14. The method according to one of claims 12 or 13, **characterized in that** the step for pre-treating the precursor of silica microspheres (PR2) comprises a step for cutting out silica microtubes (PR2) with a laser (7).

15. The method according to claim 14, **characterized in that** the step for cutting out silica microtubes (PR2) further comprises a simultaneous step of sweeping with a sweeping gas (71).

16. The method according to one of claims 2 to 15, **characterized in that** it further includes a step for injecting a silicone halide (H).

17. A method for assembling silica microspheres (M) according to claim 1, by agglomeration of the microspheres (M) with an agglomerating agent.

18. A method for assembling silica microspheres (M) according to claim 1, by discontinuous sintering which comprises the steps of:
• optionally mixing silica microspheres (M) and silica nanopowder (N) so as to obtain a composition (M'),
• packing silica microspheres (M) or said composition (M') in a mold (89),
• pre-heating the silica microspheres (M) or the composition (M') by applying microwave's preferentially in the presence of oxalic acid vapors (85) and
• heating the silica microspheres (M) or of the pre-heated composition (M') in a heat oven (88).

19. The method for assembling silica microspheres according to claim 1 (M) according to claim 1, by continuous sintering which comprises the steps of:
• optionally mixing silica microspheres (M) and silica nanopowder (N) so as to obtain a composition (M'),
• heating silica microspheres (M) or said composition (M') in the presence of an electrical resistor (93) by continuously depositing said silica microspheres (M) or said composition (M') on a conveyor belt (90) and by temporarily immobilizing said silica microspheres (M) or said composition (M') at the electrical resistor (93).

20. The use of silica microspheres (M) according to claim 1, in the flocking of surfaces with a thermal lance, such as concrete, plaster or a metal alloy.

21. The use of silica microspheres (M) according to claim 20, **characterized in that** said flocking comprises a first step for mixing silica microspheres (M) with the silica nanopowder (N) and advantageously silica fibers and a second step for projecting the composition from the mixture of the first step with a thermal lance.

22. The use of silica microspheres (M) according to claim 1, as a heat insulation material.

23. The use of silica microspheres (M) from the method according to one of claims 12 to 15, for storing gas (77).

24. The method for storing gas according to claim 23, **characterized in that** it comprises a step for heating silica microspheres (M) to a temperature greater than or equal to 800°C in the presence of helium or hydrogen (77) at a pressure of greater than or equal to 10⁷ Pa.
